# EUROPEAN PATENT APPLICATION

(11) **EP 4 745 081 A1**
(43) Date of publication of application: **20.05.2026**
(21) Application number: 24213662.0
(22) Date of filing: 18.11.2024
(51) Int. Cl.: C01B 3/00

(54) **METHODS FOR THE PRODUCTION OF ENERGY**

(62) Divisional of application: 24218133.7
(71) Applicant: Woudenberg, Robert, 4463 LB Goes (NL)
(72) Inventor: Woudenberg, Robert, 4463 LB Goes (NL)

(57) **Abstract**

The present invention introduces novel methods and procedures to establish optimal conditions for ENERGY PRODUCTION, ensuring that the process is both reproducible and controllable. These methods utilize extremely strong electric fields that exists at the INTERFACE area between PRIMARY SOLIDs and SECONDARY SOLIDs that each have different work function values. Prescribed types of solids, having the highest work function values, allow absorbed HYDROGEN atoms to migrate to the INTERFACE area, followed by the ionization of HYDROGEN atoms within this area. The strong electric field will concentrate HYDROGEN ions in an extreme high density at the INTERFACE area. Preferred methods include the use of PRIMARY SOLIDs whose work function value is increased by the absorption of HYDROGEN, applying additional STIMULI and implementing fully enclosed INTERFACE areas. Increased work function values and/or additional STIMULI further improve the ionization and accumulation of HYDROGEN ions. Escape of accumulated HYDROGEN ions from the INTERFACE area is prevented by a suitable FULLY ENCLOSED INTERFACE area, safeguarding that accumulation of ions continues until the required threshold density of HYDROGEN ions is surpassing the required threshold density to initiate and maintain ENERGY PRODUCTION.

## Description

### Field of the present invention

The present invention relates to energy generators that carry out a process for ENERGY PRODUCTION, more specifically by performing interactions between specific types of MATTER and HYDROGEN.

### Definitions

Some terms or words in this document are written in upper case format. Except for the words of the title of present invention, they have specific meanings:
CHARGED PARTICLES
   Ions, electrons
CONDUCTING SOLID
   A solid that allows electrons to pass through easily.
DIPOLE
   Charge dipole composed of migrating electrons and electrons that are freed by local HYDROGEN ionization at an INTERFACE.
ELECTROCHEMICAL MEDIUM
   MATTER containing free moving ions to promote electrolysis.
ENERGY PRODUCTION
   Energy production caused by physics that, at the date of filing of current patent application, not yet fully is understood. Suggested causes are nuclear interactions, e.g. nuclear fusions or nuclear transmutations and/or effects of local superconductivity.

### EXAMPLE

Examples that are provided for illustrative purposes and should not be construed as limiting the scope of the present invention. It will be understood by those skilled in the art that various modifications, substitutions, and alterations can be made without departing from the spirit and scope of the claimed invention.

### FERMI EQUILIBRIUM REGION

The region where the Fermi levels of PRIMARY SOLIDs and SECONDARY SOLIDs align upon contact at their INTERFACEs.

### FULLY ENCLOSED

Fully enclosed such that the INTERFACE area is only in direct contact with PRIMARY SOLID and SECONDARY SOLID and/or an ISOLATOR in such a manner that ions and/or electrons only can migrate within the PRIMARY SOLID and SECONDARY SOLID and cannot escape from the INTERFACE area.

### HYDROGEN

Protium, Deuterium or Tritium.

### INTERFACE

Contact interface between different MATTERs.

### ISOLATOR

MATTER that prevents the flow of ions and/or electrons.

### MATTER

Matter in the plasma, gas, liquid, or solid state.

### MECHANICAL

Impact by pressure waves, cracking of solid(s) due to expansion by HYDROGEN absorption or shrink due to temperature change and/or desorption of HYDROGEN.

### METAL

Metal element from the periodic table or an alloy thereof.

### PRIMARY SOLID

A CONDUCTING SOLID that has a high ability of absorbing HYDROGEN and has a higher work function value than the work function value of the applied SECONDARY SOLID under similar circumstances. Preferably the PRIMARY SOLID has an increased work function value when it has absorbed HYDROGEN. Both PRIMARY SOLIDs and SECONDARY SOLIDs are part of the same construction and share a common INTERFACE.

### SECONDARY SOLID

A CONDUCTING SOLID or an n-type semiconductor that has a lower working function compared to the applied PRIMARY SOLID under similar circumstances. Both PRIMARY SOLIDs and SECONDARY SOLIDs are part of the same construction and share a common INTERFACE.

### STIMULI

Any method or combination of methods to deliberately, directly or indirectly, causing accelerating, decelerating or creation of ions and/or accelerating electrons and/or alters the delta work function value at the INTERFACEs of PRIMARY SOLIDs and SECONDARY SOLIDs and/or influences the electric field strength at the INTERFACE.

The following EXAMPLEs are provided:
The use of a power source that generates pulsed and/or high frequency alternating current of electrons;
The use of a power source that generates pulsed and/or high frequency alternating electromagnetic waves;
The use of a heat source generating static and/or dynamic heat supply;
The use of a plasma discharge source;
The use of a high voltage power source;
The use of a source or method that causes MECHANICAL distortion, e.g. by means of piezo electric devices.

Furthermore, the symbols in the figures have following meaning:

**Table 1**

| Symbol: | Meaning: |
|---|---|
| e⁻ | Electrons |
| H | HYDROGEN atoms |
| H⁺ | Positive charged HYDROGEN ions |
| G₂ | Gas molecules |
| G⁺ | Positive charged gas ions |
| S | Atoms of solid matter |

### Background of the present invention

The present invention's prior art relates to the implementation of energy generators that apply methods for ENERGY PRODUCTION caused by interaction between specific types of metals and hydrogen that is absorbed within the lattice structure of those metals.

One of the most known examples of prior art relates to the method announced by the university of Utah on March 2023 1989, presented by researchers Martin Fleischmann and Stanley Pons. Their claims have never been widely accepted nor replicated. See Ref.1. The claimed process by Martin Fleischmann and Stanley Pons inspired several researchers to investigate similar processes and methods.

More recently the research, related to similar phenomena, performed by the Research Center for Electron Photon Science, Tohoku University, lead by Yasuhiro Iwamura, shows promising results en repeatability. See Ref.3, that also mentions research performed by others in this field.

Analysis of some past LENR research results in relation to present invention:
ENERGY PRODUCTION reported by Martin Fleischmann and Stanley Pons:
   Reproducibility has always been the weakest aspect of the ENERGY PRODUCTION reported by Martin Fleischmann and Stanley Pons. According their specification the cathode of their setups should be constructed out of pure solid palladium in the form of a rod or in some cases cubes or wires. The current insights of present invention motivates the reasoning why reproducibility always has been a big issue regarding their specified method. According to the present invention at least a combination of PRIMARY SOLIDs and SECONDARY SOLIDs is required to obtain the desired energy production. It is very likely that in the rare occasions where Martin Fleischmann and Stanley Pons obtained positive results, impurities within the applied cathode provided the required conditions coincidentally. For EXAMPLE one or more fully embedded copper fractions would meet the conditions claimed by present invention. This also explains why mostly all third parties have failed replication of the Martin Fleischmann and Stanley Pons concept. They too mostly applied as pure palladium as they possibly could obtain which therefore likely did not contain the required combination of PRIMARY SOLID and SECONDARY SOLID.
ENERGY PRODUCTION based on the use of metals in powder form:
   Various researchers, e.g. Yoshiaki Arata, M. J. A., Yue-Chang Zhang, Tomoya Yamauchi, Yutaka Mori, Shuto Higashi, Hayato Seiichi, Masahiko Hasegawa, Akito Takahashi, Akira Taniike, Masato Kanasaki, Akito Takahashi, Andrea Rossi, et. al., reported ENERGY PRODUCTION by applying metals in powder form. In many cases the experiments were performed where these powders were exposed to HYDROGEN within a temperature range from e.g. 300 - 1000 °C. At such temperatures metal powder parts tend to sinter or even melt. Metal powders with particles in the nanometer and micrometer size range have in general a lower melting temperatures than in bigger particle size. In some cases combinations of copper and nickel both in powder form were used. Under these circumstances the likelihood that metal fractions of metal A (a SECONDARY SOLID according present invention) are fully embed by metal parts of metal B (a PRIMARY SOLID according present invention) were present by coincidence is very reasonable.
ENERGY PRODUCTION based on the use of alloys:
   Various researchers, e.g. Francesco Celani, et. al., reported ENERGY PRODUCTION by applying metals in the form of an alloy. Alloys may contain small clusters of metal fractions of metal A (a SECONDARY SOLID according present invention) that are fully enclosed by metal B (a PRIMARY SOLID according present invention) forming small INTERFACEs.
ENERGY PRODUCTION based on the use of multilayers of different metals:
   Various researchers, e.g. Yasuhiro Iwamura, Takehiko Ito, Jirota Kasagi, Hideki Yoshino, Shotaro Hirano, Masahide Ise, Tetsuharu Ibaraki, et. al. reported ENERGY PRODUCTION by applying metals in multilayer implementations, mostly with layer thickness of several nanometers. During the production of such multilayers, metal fractions of metal A (a SECONDARY SOLID according present invention) may be fully enclosed by metal B (a PRIMARY SOLID according present invention) either by fully enclosing existing layers due to the production process (often sputtering method is applied), or because thickness of layers is not as homogeneous as targeted such that isolated layer fractions existed that were fully embedded.

Although some of the referenced researchers claimed successful results in establishing ENERGY PRODUCTION that exceeded the levels of energy production based on chemical processes, sufficient insights of the principles of their ENERGY PRODUCTION processes are lacking. None of these researchers explicitly claim FULLY ENCLOSED INTERFACE areas as a requirement.

### Supportive literature and prior art

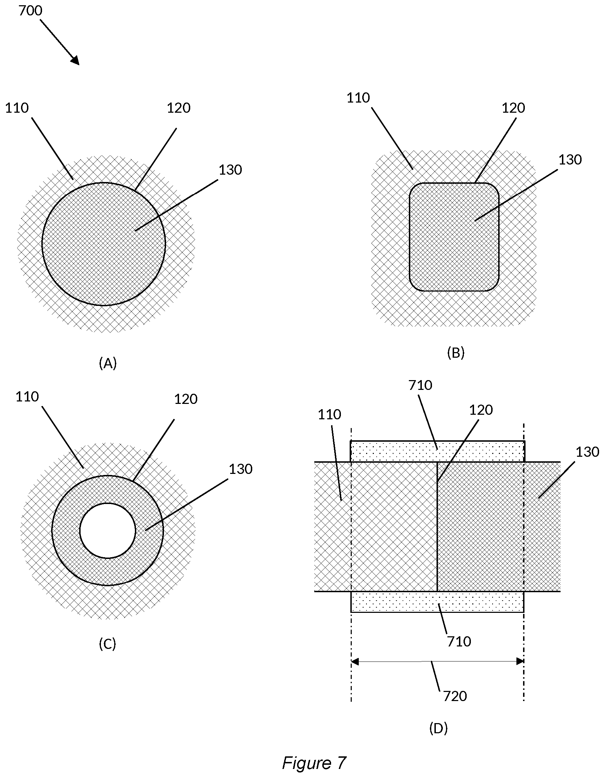

*Ref. 1 "*Simple experiment" results in sustained n-fusion, University of Utah, March 23 1989. The press release of the university of Utah, announcing the discovery of Martin Fleischmann and Stanley Pons.
*Ref.2 Conditions for the Observation of Excess Power in the DlPd System Michael McKubre, Steven Crouch-Baker, and Francis Tanzella SRI INTERNATIONALMenlo Park, CA 94025 (USA)*
   This reference shows the relevance of having high densities of deuterium within the lattice of palladium electrodes to observe excess ENERGY PRODUCTION.
*Ref. 3 Anomalous heat generation that cannot be explained by known chemical reactions produced by nano-structured multilayer metal composites and hydrogen gas,* Yasuhiro Iwamura et al 2024 Jpn. J. Appl. Phys.
   This more recent reference mentions several combinations of materials that match the combinations of materials as specified by the present invention, confirming ENERGY PRODUCTION. This reference also describes specific STIMULI methods such as the step wise increase and/or decrease of power supplied by a heater.
   Present invention claims a wider range of STIMULI methods and instructions to further improve on the efficiency of ENERGY PRODUCTION by adding additional requirements to fully enclose the INTERFACE areas, as illustrated by Figure 7 of present invention. The motivation for FULLY ENCLOSED INTERFACE areas is given in section "Detailed description of the present invention" of present invention specification.
*Ref.4 Patent application* WO2020122098A1*, Heat utilization system, and heat generating device.*
   This patent application relates to Ref.3, providing additional enhancements.
Ref.5 *Patent application* WO2023032649A1, *Hydrogen heating device and hydrogen heating method.*
   This patent application relates to Ref.3 and Ref.4 providing further enhancements.
*Ref.6 Contact Potentials, Fermi Level Equilibration, and Surface Charging, Pekka Peljo, José A. Manzanares, and Hubert H. Girault.*
   This reference provides relevant characteristics of an electric DIPOLE within a FERMI EQUILIBRIUM REGION of metal to metal interface area.
*Ref. 7 Adsorption of hydrogen on nickel single crystal surfaces K. Christmann, O. Schober, G. Ertl, and M. Neumann.*
   This reference relates to the increase of the work function value of nickel when HYDROGEN is absorbed.
*Ref. 8 Adsorption of hydrogen on palladium single crystal surfaces H. CONRAD, G. ERTL and E. E. LATTA*
   This reference relates to the increase of the work function value of palladium when HYDROGEN is absorbed.
*Ref.9 Patent application* WO2023228630A1, *POTENTIAL DIFFERENCE GENERATION DEVICE.*
   This reference relates to the phenomenon of released CHARGED PARTICLES in the case a multilayer of nickel and copper has been subjected to hydrogen.
   The present invention specifies more accurate what causes the release of CHARGED PARTICLES. According to the present invention, this phenomenon should be prevented to obtain an optimum situation for ENERGY PRODUCTION, by for example applying FULLY ENCLOSED INTERFACE areas according implementations as for EXAMPLE depicted in Figure 7.
*Ref. 10 Patent application* US10841989B2*, GASEOUS-PHASE IONIZING RADIATION GENERATOR.*
   This reference supports the phenomenon as claimed by Ref.9.
*Ref.11 Critical fields for ionization of the hydrogen molecule and the molecular hydrogen ion, M. B. Smirnov and V. P. Kranov.*
   This reference describes the required field strength required to ionize hydrogen.
*Ref. 12* Microwave ionization of hydrogen atoms, Dima Shepelyansky (2012), Scholarpedia, 7(1):9795.
   This reference provides information about microwave ionization of hydrogen atoms as an example of suitable STIMULI.

### Assumptions

It is assumed that those skilled in the art have sufficient knowledge and skills to implement and understand the present invention, including:
The understanding of following patent applications and/or patents:
   WO2020122098A1 (Ref.4), WO2023032649A1 (Ref.5), WO2023228630A1 *(Ref.9),* US10841989B2 *(Ref.10);*
The understanding of Ref.1, Ref.2, Ref.3, Ref.6, Ref.7, Ref.8, Ref.11, and Ref.12 as mentioned in section "Supportive literature and prior art" of the present invention specification;
The ability to replicate implementations specified in above references;
The ability to apply technology required to arrange absorption of HYDROGEN atoms and/or HYDROGEN ions within a FERMI EQUILIBRIUM REGION;
The ability to implement technology to produce suitable STIMULI;
The ability to arrange sufficient safety measures.

### Summary of the present invention

The present invention introduces novel methods and procedures to establish optimal conditions for ENERGY PRODUCTION, ensuring that the process is both reproducible and controllable. These methods utilize extremely strong electric fields that exists at the INTERFACE areas between PRIMARY SOLIDs and SECONDARY SOLIDs that each have different work function values. PRIMARY SOLIDs allow absorbed HYDROGEN atoms to migrate to the INTERFACE areas, followed by the ionization of HYDROGEN atoms within these areas. The strong electric field will concentrate HYDROGEN ions with an extreme high density at the INTERFACE areas. Preferred methods include the use of PRIMARY SOLIDs whose work function value is increased by the absorption of HYDROGEN, the use of additional STIMULI and implementing FULLY ENCLOSED INTERFACE areas. Increased work function values and/or additional STIMULI further improve the ionization and accumulation of HYDROGEN ions. Escape of accumulated HYDROGEN ions from the INTERFACE areas is prevented by suitable FULLY ENCLOSED INTERFACE areas, safeguarding that accumulation of HYDROGEN ions continues until the required threshold density of HYDROGEN ions is surpassing the required threshold density to initiate and maintain ENERGY PRODUCTION.

The methods of present invention are composed of following steps:
Step 1. The creation of an electric DIPOLEs, within (FULLY ENCLOSED) INTERFACE areas between suitable PRIMARY SOLIDs and suitable SECONDARY SOLIDs.
Step 2. The absorption of HYDROGEN by mainly or only the PRIMARY SOLIDs.
Step 3. Migration of absorbed HYDROGEN atoms towards the INTERFACE areas where they will be ionized by the strong electric field present.
Step 4. Accumulation of HYDROGEN ions at the INTERFACE areas until the density of HYDROGEN ions surpasses the threshold required to enable ENERGY PRODUCTION. FULLY ENCLOSED INTERFACE areas will be required for implementations where the escape of CHARGED PARTICLES from the INTERFACE areas occurs. Escape of CHARGED PARTICLES limits the accumulation of HYDROGEN ions at the INTERFACE areas.
Step 5. Introduction of STIMULI to enhance and/or control the accumulation of HYDROGEN ions.
Step 6. ENERGY PRODUCTION occurs once the density of HYDROGEN ions have surpassed the required threshold.

Note 1: in preferred applications PRIMARY SOLIDs are applied whose work function value increases when HYDROGEN has been absorbed. An increased work function value will cause an increased electric field strength at the INTERFACE areas which allows for improved HYDROGEN ionization conditions. In some cases the additional migration of electrons due to the altered delta work function value will also contribute to the ionization of HYDROGEN atoms by means of electromagnetic fields caused by the acceleration of electrons that move through the strong electric field in order to create new equilibrium. Note 2: Controlling the ENERGY PRODUCTION process is out of the scope of the present invention.

### Brief description of drawings

Figure 1 illustrates the principle of migration of electrons at the INTERFACE area between a PRIMARY SOLID and a SECONDARY SOLID upon contact, caused by the alignment of the Fermi levels of both solids upon contact.
Figure 2 illustrates the electric dipole and the corresponding electric field strength at the INTERFACE area between a PRIMARY SOLIDs and a SECONDARY SOLID whereby both type of solids are CONDUCTING SOLIDs.
Figure 3 illustrates the formation of an area containing a high density HYDROGEN ions and illustrates the increase of the electric dipole and the corresponding increased electric field strength at the INTERFACE area between a PRIMARY SOLID and a SECONDARY SOLID caused by an increased work function value of a preferred PRIMARY SOLID that has absorbed hydrogen.
Figure 4 illustrates the electric dipole and the corresponding electric field at the INTERFACE area between the PRIMARY SOLID and the SECONDARY SOLID whereby the PRIMARY SOLID consist of a CONDUCTING SOLID and the SECONDARY SOLID consist of an n-type semiconductors.
Figure 5 illustrates the formation of an area containing a high density HYDROGEN ions and illustrates the increase of the electric dipole and the corresponding increased electric field strength at the INTERFACE area between a PRIMARY SOLID and a SECONDARY SOLID caused by an increased work function value of a PRIMARY SOLID that has absorbed hydrogen, whereby the PRIMARY SOLID consist of CONDUCTING SOLID and the SECONDARY SOLID consist of an n-type semiconductor.
Figure 6 illustrates effects caused by escaping HYDROGEN ions from the INTERFACE area that holds an extreme high density HYDROGEN ions.
Figure 7 illustrates EXAMPLEs of FULLY ENCLOSED INTERFACE areas that prevent the escape of HYDROGEN ions from INTERFACE areas.
Figure 8 illustrates the area of ENERGY PRODUCTION and the aimed location of optionally applied STIMULI.

### Detailed description of the drawings

A clear understanding of the key advantages of the present invention may be had by reference to the appended drawings, which illustrate the principles of the invention, although it will be understood that such drawings depict preferred embodiments of the invention and, therefore, are not to be considered as limiting its scope with regard to other embodiments which the invention is capable of contemplating. The appended drawings are two dimensional cross section representations of three dimensional models. Accordingly:

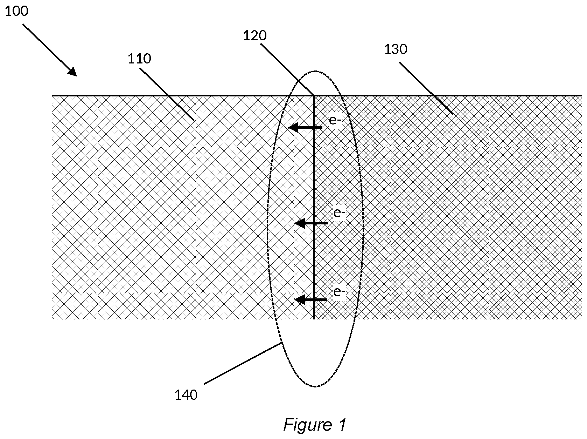

Figure 1 represents a composition 100 of a cross section of a composition of a PRIMARY SOLID 110 and a SECONDARY SOLID 130 interfacing each other at location 120 such that a FERMI EQUILIBRIUM REGION is created by migration of electrons 140 from the SECONDARY SOLID 130 to the PRIMARY SOLID 110 upon contact, initiated by the different work function values of both solids.

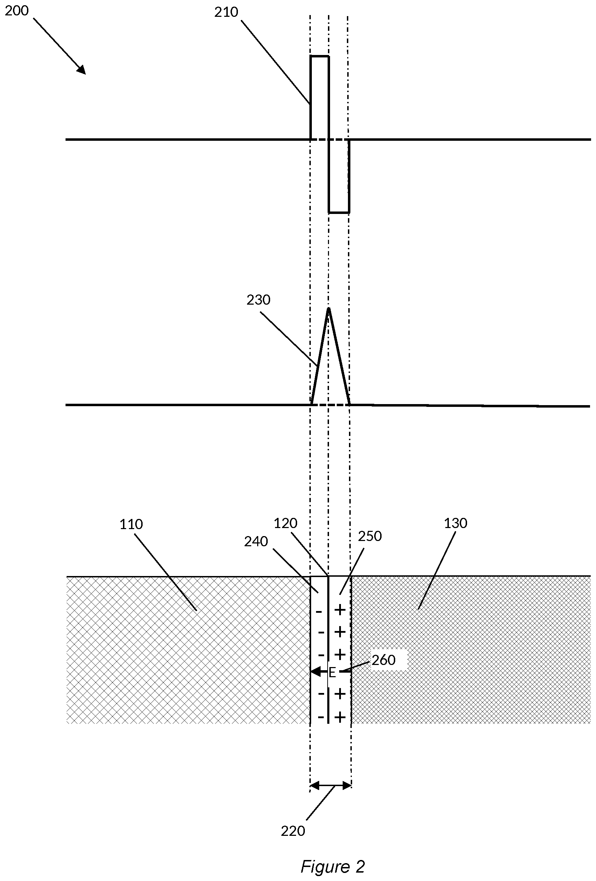

Figure 2 represents a composition 200 to illustrate the density of electrons 210 as a function of position within the FERMI EQUILIBRIUM REGION 220 near the INTERFACE 120, composed of a PRIMARY SOLID 110 and a SECONDARY SOLID 130, whereby both types of solids are CONDUCTING SOLIDs, such that an electric DIPOLE 210 is formed within the FERMI EQUILIBRIUM REGION 220, created by a migration of electrons 140 from from the SECONDARY SOLID 130 to the PRIMARY SOLID 110. This electric DIPOLE causes an electric field E 260 that has an indicative strength distribution 230 within the FERMI EQUILIBRIUM REGION 220. The area that receives the majority of the migrated electrons within PRIMARY SOLID 110 is indicated by 240. The area that supplied the majority of the migrated electrons within SECONDARY SOLID 130 is indicated by 250.

Note that DIPOLE 210 not always consists of a symmetric distribution as indicated. The actual (a)symmetry of its distribution will depend on many factors, e.g. volume ratio, work function differences between applied PRIMARY SOLIDs and SECONDARY SOLIDs.

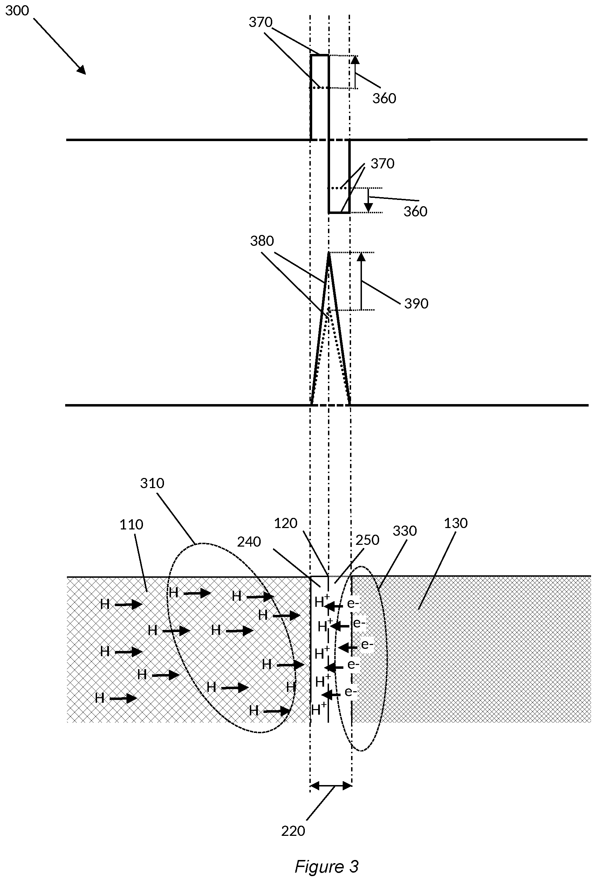

Figure 3 represents the composition 300 to illustrate the formation of an area containing a high density HYDROGEN ions. This effect can be explained by summing up the sequence of consecutive events that cause it:
Event 1: Starting situation is the presence of the electric DIPOLE 210 caused by the INTERFACE between a PRIMARY SOLID 110 and a SECONDARY SOLID 130, whereby both type of solids are CONDUCTING SOLIDs.
Event 2: Once HYDROGEN is being absorbed by mainly the PRIMARY SOLID 110, the migration of HYDROGEN atoms 310 occurs towards the area 240 that has the highest density of electrons within the FERMI EQUILIBRIUM REGION 220.
Event 3: The arrival of migrating HYDROGEN atoms 310 at the INTERFACE 120.
Event 4a: In the case a PRIMARY SOLID is applied whose work function value is not altered by the absorption of HYDROGEN atoms, HYDROGEN atoms, once they have migrated to the INTERFACE area, will be ionized by the electric field when its strength is sufficiently strong.
Event 4b: In the case a PRIMARY SOLID is applied whose work function value increases by the absorption of HYDROGEN atoms when HYDROGEN atoms arrive at the INTERFACE, the increased work function value of such PRIMARY SOLID causes additional migration of electrons 330 from the area of the SECONDARY SOLID 130 that contains the lowest density electrons 250 towards the area 240 that has the highest density electrons within the PRIMARY SOLID 110. The additional migration of electrons cause an increase 360 of the electric DIPOLE 370 and an increases 390 of the electric field strength 380 at the INTERFACE. When the electric field strength is sufficient, HYDROGEN atoms will be ionized. Electromagnetic field effects will occur, caused by additional migrated electrons as a result of the increased delta work function value may additionally contribute to the HYDROGEN ionization. These additional migrated electrons are accelerated by the strong electric field at the INTERFACE 120 and gain energy in the order of the delta work function value (~ up to several eV).

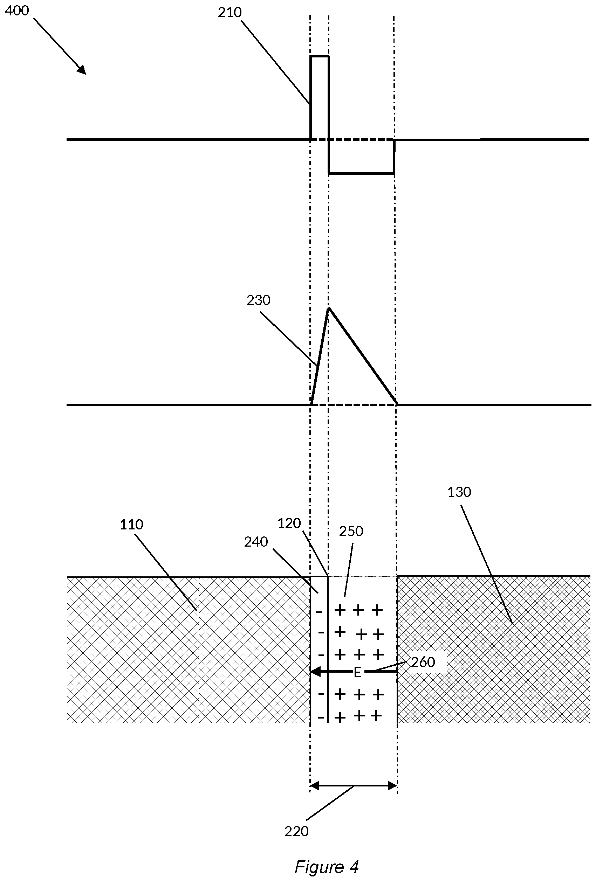

Figure 4 is similar to Figure 2, representing the composition 400 where the SECONDARY SOLID 130 consists of an n-type semiconductor instead of a CONDUCTING SOLID.

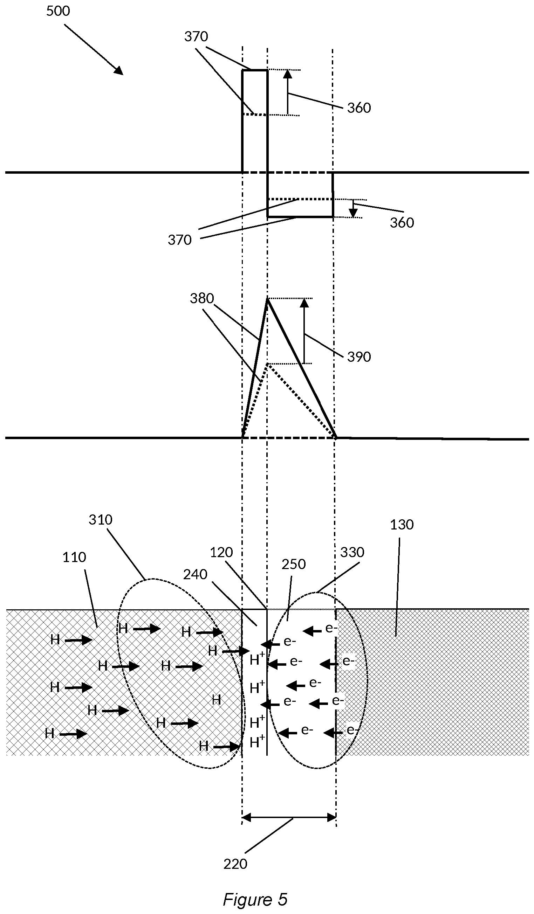

Figure 5 is similar to Figure 3, representing the composition 500 where the SECONDARY SOLID 130 consists of an n-type semiconductor instead of a CONDUCTING SOLID.

Note that Figure 2, Figure 3, Figure 4 and Figure 5 presents simplified graphs of electric DIPOLEs and electric field strength distributions. They serve to illustrate applicable principles.

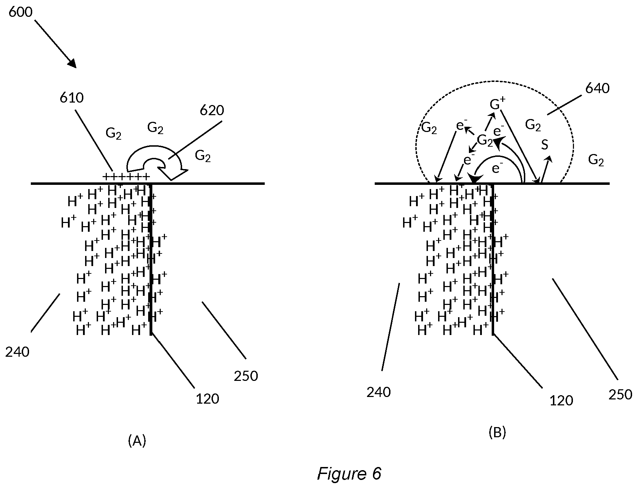

Figure 6 represents the compositions 600 illustrating the effects caused by escaping HYDROGEN ions from the applied solids. The effects are caused by an ultra high density of HYDROGEN ions within the PRIMARY SOLID area 240 near the INTERFACE 120 that borders at an area containing gas G₂ 640. Figure 6(A) indicates the formation of a strong external electric field 620 near the INTERFACE 120 at a gaseous environment, caused by escaping HYDROGEN ions 610 from the surface. In theory, as long as HYDROGEN atoms will continue to enter the INTERFACE 120, the ionization of HYDROGEN atoms will continue, increasing the density of HYDROGEN ions. As HYDROGEN can move freely within the PRIMARY SOLID 110, part of the high density HYDROGEN ions will tend to escape the PRIMARY SOLID 110 surface as soon as their density is high enough. Escape of HYDROGEN ions will form a high concentration of charged ions at the surface 610 and therefore a strong local external electric field 620 at that location. Figure 6(B) 640 indicates the release of electrons, caused by the strong external electric field 620, through the (partly) charged gas G₂. A part of the highly energized electrons will ionize gas molecules G₂ of which the ionized gas atoms in turn may hit the negative charged solid surface with enough energy and cause ejection of solid particles into the gaseous environment, a so called "sputter effect" (physical vapour deposition), whereby (charged) PRIMARY SOLID 110 and/or SECONDARY SOLID 130 particles, indicated by S, are released. According to Ref.9 also charged metal particles may be released (not indicated in Figure 6). Part of the electrons within area 640 will also recombine with HYDROGEN ions at the surface into HYDROGEN atoms en/or HYDROGEN molecules (not indicated in Figure 6).

Note that not all physical effects are indicated within Figure 6. The purpose of Figure 6 solely serves to explain some of the relevant effects of a very high concentration of HYDROGEN ions in such implementation. Also note that the escape of CHARGED PARTICLES as indicated by Figure 6 should be prevented in order to obtain an effective process to allow for ENERGY PRODUCTION. Escape of electrons and/or HYDROGEN ions from the INTERFACE area will limit the density of HYDROGEN ions at the INTERFACE area. The limitation of the density of HYDROGEN ions will in some cases prevent that the HYDROGEN ions density threshold necessary to start ENERGY PRODUCTION will be reached. The escape of CHARGED PARTICLES in similar setups has been confirmed by for instance Ref.9 and Ref.10. EXAMPLEs of preferred constructions that prevents such escapes are given by Figure 7.

Note that for readability of the figure not all external electrical field areas are indicated.

Figure 7 represents the composition 700 illustrating four EXAMPLE options to enclose the INTERFACE 120 between a PRIMARY SOLID 110 and a SECONDARY SOLID 130, preventing the escape of CHARGED PARTICLES, to allow for sufficient accumulation of HYDROGEN ions to surpass the density threshold required for ENERGY PRODUCTION. Figure 7 represents two dimensional cross sections of three dimensional models.

Option (A) is an impression of a FULLY ENCLOSED INTERFACE 120 of a sphere shaped SECONDARY SOLID 130 that is FULLY ENCLOSED by a layer of PRIMARY SOLID 110. Option (B) is an impression of a FULLY ENCLOSED INTERFACE 120 of a cubical shaped SECONDARY SOLID 130 that is surrounded by a FULLY ENCLOSED layer of PRIMARY SOLID 110.

Option (C) is an impression of a FULLY ENCLOSED INTERFACE 120 of a hollow sphere shaped SECONDARY SOLID 130 that has a FULLY ENCLOSED INTERFACE 120 by PRIMARY SOLID 110.

Option (D) is an impression of a FULLY ENCLOSED INTERFACE area where in addition a suitable ISOLATOR 710 covers the INTERFACE area. This ISOLATOR 710 shall stretch over a length 720 that is sufficient to prevent the escape of CHARGED PARTICLES.

Note: the above EXAMPLEs are just a few EXAMPLEs of solutions to create FULLY ENCLOSED INTERFACEs 120. It should be understood that there are many other solutions to create similar FULLY ENCLOSED INTERFACE solutions by those skilled in the art.

Note: To achieve the largest electric field strength at the contact interface between SECONDARY SOLID and PRIMARY SOLID, the SECONDARY SOLID part should be designed with sharp features and a small size relative to the PRIMARY SOLID body. This configuration enhances charge concentration and maximizes the local electric field strength.

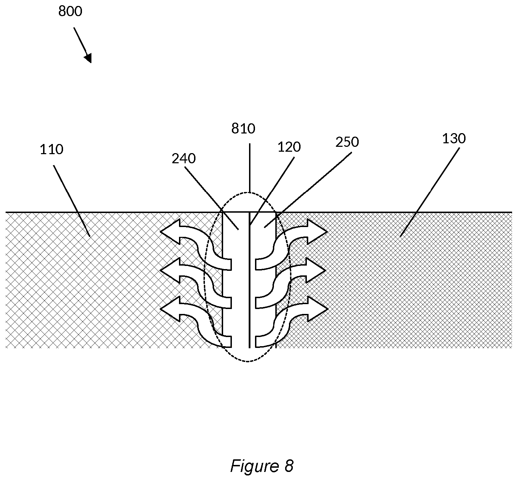

Figure 8 represents the composition 800 illustrating ENERGY PRODUCTION, optionally initiated and maintained by STIMULI within the area 810 where the density of HYDROGEN atoms and/or ions and electrons is maximized.

### Detailed description of the present invention

By applying a combination of known physics effects, methods are presented that allow for creating the right conditions for reproducible and controllable ENERGY PRODUCTION at relative low temperatures (0 ~ 1500 C°). The essence is to create and utilize extreme high densities of HYDROGEN atoms, HYDROGEN ions and electrons.

Areas with extreme high densities of HYDROGEN atoms, HYDROGEN ions and electrons can be created within the structure of a suitable CONDUCTING SOLID that is able to absorb HYDROGEN, preferably, but not exclusively, a suitable METAL such as nickel or palladium.

The first required physics effect is the creation of a strong electric field at the INTERFACE area between a PRIMARY SOLID and a SECONDARY SOLID. Upon contact, electrons very close to the INTERFACE migrate from the solid that has the lowest work function value to the solid that has the highest work function value. This creates an electric DIPOLE and an electric field within the FERMI EQUILIBRIUM REGION at the INTERFACE area.

The second required physics effect is the capability of HYDROGEN absorption by at least the preferred PRIMARY SOLIDs.

The third required physics effect is the ionization of HYDROGEN atoms near the INTERFACE when the electric field strength at the INTERFACE is larger than the threshold value at which absorbed HYDROGEN atoms will be ionized in such situation.

It is preferred to apply PRIMARY SOLIDs, whose work function value increases by the absorption of HYDROGEN. Once HYDROGEN atoms have been absorbed by such preferred PRIMARY SOLID(s), migrated and arrived at the INTERFACE, an increased work function value of those preferred PRIMARY SOLIDs will be established. See also Ref.7 and Ref.8. Once the work function value of the PRIMARY SOLID(s) increases, while the work function value of the SECONDARY SOLID(s) does not alter in a similar manner, additional electrons will migrate from the SECONDARY SOLID(s) to the PRIMARY SOLID(s), causing an increased electric DIPOLE and an increased electric field strength at the INTERFACE. Migrating electrons will create a strong local electromagnetic fields within the INTERFACE area since they will accelerate while traveling through the strong electric field within the INTERFACE area to obtain a new equilibrium.

An EXAMPLE is given of a copper-nickel combination supporting the claim of ionization of HYDROGEN in such situation in general under the right conditions:
The difference between the work function value of nickel and copper is approx. 0.3 ~ 0.7 eV. The contact potential at a metal-metal junction is typically on the order of the work function value difference. For a nickel-copper interface, the contact potential will be in the range of 0.3 ~ 0.7 V. For a nickel-copper combination specifically, the electric field strength at their INTERFACE would likely be on the order of 10⁶ ~ 10⁹ V/m, assuming no external voltage is applied. The space charge area at such an INTERFACE area would likely be extremely thin, possibly on the order of nanometers or less. The theoretical critical field strength to ionize hydrogen is approximately E ≈ 5.14 × 10¹¹ V/m in vacuum. However, due to quantum effects and other factors, ionization begin to occur at lower electric field strengths under the given circumstances at INTERFACE areas between preferred PRIMARY SOLIDs and SECONDARY SOLIDs. When HYDROGEN is embedded in a nickel lattice, it occupies specific sites called trap sites. These trap sites have a binding energy that affects the ionization process: The binding energy of HYDROGEN to trap sites in nickel is typically around 0.1 ~ 0.3 eV, depending on the type of defect. This binding energy effectively reduces the energy required to ionize the hydrogen atom compared to free hydrogen in a vacuum environment. When HYDROGEN is absorbed within nickel lattice the work function value of nickel increases, therefore increasing the delta work function value. See Ref.7. Successful ENERGY PRODUCTION by making use of combinations of copper and nickel as PRIMARY SOLID and SECONDARY SOLID have been reported by Yasuhiro Iwamura and his colleagues, see Ref.3.

A SECONDARY SOLID composed of an n-type semiconductor material offers the option to further increase the electric field strength at the INTERFACE. Suitable n-type semiconductors have a lower work function value than that of CONDUCTING SOLIDs applied as SECONDARY SOLIDs. In addition, a reverse bias voltage applied to the combination of a PRIMARY SOLID and an n-type semiconductor SECONDARY SOLID further increases the electric field strength at the INTERFACE.

The fourth physics effect is the accumulation of HYDROGEN ions within the INTERFACE area. Each HYDROGEN atom that is ionized will be attracted towards the area with the highest electron density. The electric field strength at the INTERFACE will not be affected by the ionization of HYDROGEN atoms. The positive HYDROGEN ions and the free electrons that are produced when HYDROGEN atom are ionized will cancel each other out with respect to their contribution to the electrical field at that area. As long as HYDROGEN atoms will migrate to the INTERFACE area the ionization of HYDROGEN atoms will continue and the density of electrons and HYDROGEN ions will continue to increase at the INTERFACE area. At the date of filing of present invention no literature is known that indicates electrons and HYDROGEN ions will recombine in such situation. In the situation where additional STIMULI are required to increase the density of HYDROGEN ions, additional HYDROGEN ionization can be arranged by suitable STIMULI, for example by introducing a strong alternating electromagnetic field area within the INTERFACE, a method of HYDROGEN ionization that generally is known as microwave ionization, see Ref.12. A FULLY ENCLOSED INTERFACE area will be required for implementations where the escape of CHARGED PARTICLES from the INTERFACE area limits the accumulation of HYDROGEN ions in such a manner that their density will not surpass the threshold density required for ENERGY PRODUCTION.

The fifths physics effect is the ENERGY PRODUCTION. As soon as the density of HYDROGEN ions has passed the required threshold, the condition for ENERGY PRODUCTION has been established.

In some situations additional suitable STIMULI within the FERMI EQUILIBRIUM REGION will be required to assist in the formation of sufficient high density HYDROGEN ions and/or sufficient high electron density to allow ENERGY PRODUCTION.

## Claims

1. Methods and processes for ENERGY PRODUCTION comprising the following steps:
Step 1. Compose one or multiple INTERFACEs between PRIMARY SOLIDs and SECONDARY SOLIDs.
Step 2. Arrange for HYDROGEN absorption by mainly the PRIMARY SOLIDs.
Step 3. Arrange for absorbed HYDROGEN atoms to migrate towards and arrive at the INTERFACE areas.
Step 4. Arrange for absorbed HYDROGEN atoms to ionize at the INTERFACE areas.
Step 5. Arrange for HYDROGEN ions to accumulate at the INTERFACE areas until the density of HYDROGEN ions has surpassed the threshold density value required for ENERGY PRODUCTION.

2. Methods and procedures in accordance with claim 1, wherein PRIMARY SOLIDs are utilized, **characterized by** an increase in their work function value following the absorption of HYDROGEN.

3. Methods and procedures in accordance with claim 1 or 2, wherein the SECONDARY SOLIDs are n-type semiconductors.

4. Procedure in accordance with to any one of claims 1 to 3 wherein the object composed of PRIMARY SOLIDs and SECONDARY SOLIDs, has FULLY ENCLOSED INTERFACE areas.

5. Procedure in accordance with to any one of claims 1 to 4 wherein STIMULI are applied within the INTERFACE areas to enhance and/or control the accumulation of HYDROGEN ions within the INTERFACE areas.

6. Procedure in accordance with any one of claims 1 to 5 wherein HYDROGEN is supplied in the gaseous state.

7. Procedure in accordance any one of claims 1 to 5 wherein HYDROGEN is supplied in the plasma state.

8. Procedure in accordance with any one of claims 1 to 5 wherein HYDROGEN is supplied by means of electrolysis using an ELECTROCHEMICAL MEDIUM.

## Amended claims

### Amended claims in accordance with Rule 137(2) EPC.

1. Methods and processes for ENERGY PRODUCTION comprising the following steps:
Step 1. Compose one or multiple INTERFACEs between PRIMARY SOLIDs and
SECONDARY SOLIDs.
Step 2. Arrange for HYDROGEN absorption by mainly the PRIMARY SOLIDs.
Step 3. Arrange for absorbed HYDROGEN atoms to migrate towards and arrive at the INTERFACE areas.
Step 4. Arrange for absorbed HYDROGEN atoms to ionize at the INTERFACE areas.
Step 5. Arrange for HYDROGEN ions to accumulate at the INTERFACE areas until the density of HYDROGEN ions has surpassed the threshold density value required for ENERGY PRODUCTION.

2. Methods and procedures in accordance with claim 1, wherein PRIMARY SOLIDs are utilized, **characterized by** an increase in their work function value following the absorption of HYDROGEN.

3. Methods and procedures in accordance with claim 1 or 2, wherein the SECONDARY SOLIDs are n-type semiconductors.

4. Procedure in accordance with to any one of claims 1 to 3 wherein the object composed of PRIMARY SOLIDs and SECONDARY SOLIDs, has FULLY ENCLOSED INTERFACE areas.

5. Procedure in accordance with to any one of claims 1 to 4 wherein STIMULI are applied within the INTERFACE areas to enhance and/or control the accumulation of HYDROGEN ions within the INTERFACE areas.

6. Procedure in accordance with any one of claims 1 to 5 wherein HYDROGEN is supplied in the gaseous state.

7. Procedure in accordance any one of claims 1 to 5 wherein HYDROGEN is supplied in the plasma state.

8. Procedure in accordance with any one of claims 1 to 5 wherein HYDROGEN is supplied by means of electrolysis using an ELECTROCHEMICAL MEDIUM.
